# EUROPEAN PATENT APPLICATION

(11) **EP 1 865 225 A1**
(43) Date of publication of application: **12.12.2007**
(21) Application number: 06730595.3
(22) Date of filing: 30.03.2006
(51) Int. Cl.: F16H 25/24, H02K 7/06

(54) **ELECTRIC ACTUATOR**

(30) Priority: 31.03.2005 JP 2005104707
(71) Applicant: THK CO., LTD., Shinagawa-ku, Tokyo 141-0031 (JP)
(72) Inventor: TERAMACHI, Akihiro, Shinagawa-ku, Tokyo 1410031 (JP); MICHIOKA, Hidekazu, Shinagawa-ku, Tokyo 1410031 (JP); ASO, Toshiyuki, Shinagawa-ku, Tokyo 1410031 (JP); HORIIKE, Kazuya, Shinagawa-ku, Tokyo 1410031 (JP)
(74) Representative: Grünecker, Kinkeldey, Stockmair & Schwanhäusser Anwaltssozietät
(86) International application number: PCT/JP2006/306647
(87) International publication number: WO 2006/106817

(57) **Abstract**

An electric actuator is provided with a power transmission mechanism 15 capable of converting a rotating driving power supplied from an electric motor 10 to a reciprocating motion. This power transmission mechanism 15 is provided with a cylindrical member 25 formed, in its inner peripheral surface, with at least one row of rolling member rolling groove, a nut member 22 disposed to be reciprocally through the rolling members endlessly circulating in the inner peripheral surface of the cylindrical member, and a cylinder rod 27 operatively connected to an end portion of the nut member 22 to be axially movable with respect to the cylindrical member 25. The reciprocating motion of the nut member 22 in the axial direction is guided by the circular cylindrical member 25. According to such structure, high output and high controllability can be realized, as well as realizing of a compact electric actuator of a size similar to a conventional hydraulic cylinder.

## Description

### TECHNICAL FIELD

The present invention relates to an electric actuator, in which an electric motor is driven as a driving source, and which is used in place of a conventional hydraulic cylinder.

### BACKGROUND ART

For example, there is generally known a hydraulic cylinder as an actuator for realizing expansion operation (i.e., contraction/expansion operation) of a machine or like such as an injection apparatus of an injection molding machine or a link mechanism of a construction machine. In such hydraulic cylinder, pressure and flow rate of pressurized oil is changed by changing capacity of a variable pump as a pressurized oil supply source, and wide speed range and thrust range have been realized while maintaining the maximum output.

In the hydraulic cylinder driven in such manner includes a hydraulic cylinder body performing the expansion operation and a hydraulic generation device supplying the pressurized oil to the hydraulic cylinder body. The hydraulic cylinder body has a structure for performing the expansion operation by subjecting the pressurized oil supply from a hydraulic generation device including a hydraulic pump, a change-over valve and the like. In the conventional structure, the hydraulic cylinder and the hydraulic generation device constituting the hydraulic cylinder are arranged in a separated manner and are communicated through a hydraulic pipe or like so as to supply or discharge the pressurized oil. Furthermore, a structure in which the hydraulic cylinder body and the hydraulic generation device are integrated has been proposed, for example, as disclosed in the following Patent Publication 1.

Patent Publication 1: Japanese Unexamined Utility Model Application Publication No. 63-164603

### DISCLOSURE OF THE INVENTION

### PROBLEMS TO BE SOLVED BY THE INVENTION

As mentioned above, the hydraulic cylinder requires a relatively large hydraulic generation device in addition to the hydraulic cylinder body, which involves increasing in manufacturing cost, maintaining or managing cost or like at the time of incorporation. In addition, the hydraulic cylinder has a large output and realizes wide speed range and thrust range on one hand. However, it is difficult, on the other hand, to use the hydraulic cylinder for a machine or device requiring high controlling performance because the hydraulic cylinder is not suitable for fine stopping position control in a stroke. Furthermore, the conventional hydraulic cylinder involves an environmental problem of waste oil generation. Then, it has been required to change the hydraulic cylinder having the defects mentioned above to an electric actuator which is clean and easily controllable. However, in the conventional technology, it is impossible to provide an electric actuator realizing high output generation as like as in the hydraulic cylinder which is capable of installing in a space for installing the conventional hydraulic cylinder body.

The present invention was conceived in consideration of the above circumstances and an object thereof is to provide an electric actuator, which can be replaced with a conventional hydraulic cylinder, and is capable of installing in a space having a site in which a hydraulic cylinder body can be installed and of generating high output as like as in the hydraulic cylinder.

### MEANS FOR SOLVING THE PROBLEM

The electric actuator according to the present invention includes:
an electric motor provided with an output shaft;
a screw shaft connected to the output shaft to be rotatable and formed, in an outer peripheral surface thereof, with a spiral screw groove;
a nut member formed, in an inner peripheral surface thereof, with a nut groove corresponding to the screw groove, and performing a reciprocating motion in an axial direction in an screw engagement with the screw shaft in accordance with the rotating motion of the screw shaft;
a cylindrical member disposed so as to surround the screw shaft and the nut member; and
a cylinder rod operatively connected to one end of the nut member opposing to an electric motor side end thereof, having a cavity in which the screw shaft is disposed, and being movable in an anteroposterior direction with respect to the cylindrical member in accordance with the reciprocating motion of the nut member,
wherein the cylindrical member is provided, at an inner peripheral surface thereof, with at least one row of guide portion, and the nut member is provided, in an outer peripheral surface thereof, with a load guide portion corresponding to the guide portion so that the cylindrical member guides the reciprocating motion of the nut member in the axial direction thereof.

Another embodiment of an electric actuator according to the present invention includes:
an electric motor provided with an output shaft;
a screw shaft connected to the output shaft to be rotatable and formed, in an outer peripheral surface thereof, with a spiral screw groove;
a nut member formed, in an inner peripheral surface thereof, with a nut groove corresponding to the screw groove, and performing a reciprocating motion in an axial direction in an axial direction in an screw engagement with the screw shaft in accordance with the rotating motion of the screw shaft;
a cylindrical member disposed so as to surround the screw shaft and the nut member; and
a cylinder rod operatively connected to one end of the nut member opposing to an electric motor side end thereof, having a cavity in which the screw shaft is disposed, and being movable in an anteroposterior direction with respect to the cylindrical member in accordance with the reciprocating motion of the nut member,
wherein the cylindrical member is provided, at an inner peripheral surface thereof, with at least one row of rolling member rolling groove, and the nut member is provided, in an outer peripheral surface thereof, with a load rolling groove corresponding to the rolling member rolling groove, a non-load rolling passage formed in parallel with the load rolling groove, a pair of return passages connecting two ends formed by the rolling member rolling groove and the loaded rolling groove and two ends formed by the non-loaded rolling passage, respectively, a plurality of rolling members disposed so as to be rolled in an endless circulation passage composed of the loaded rolling passage, the non-loaded rolling passage and the paired return passages, so that the cylindrical member guides the reciprocating motion of the nut member in the axial direction thereof.

In the electric actuators of the characters mentioned above, it may be desired that the screw groove provided for the screw shaft and the nut groove provided for the nut member are screw-engaged with each other through a plurality of rolling members.

It may be also desired that in the electric actuators of the characters mentioned above, the nut member is provided with a circulation mechanism for endlessly circulating the plural rolling members disposed between the screw groove and the nut groove.

It may be also desired that in the electric actuators of the characters mentioned above, the nut member and the cylinder rod are integrally formed.

It may be also desired that in the electric actuators of the characters mentioned above, the cylindrical member is formed in substantially circular cylindrical shape.

It may be also desired that in the electric actuators of the characters mentioned above, the cylindrical member is composed of a seamless cylinder.

It may be further desired that in the electric actuators of the characters mentioned above, the cylindrical member has a portion near the rolling member rolling groove, the portion being formed of a steel material, and another portion thereof is formed of aluminium alloy or resin.

It may be further desired that in the electric actuators of the characters mentioned above, the cylinder rod is supported to be movable in an axial direction through a slide bearing provided for the cylindrical member.

It may be further desired that in the electric actuators of the characters mentioned above, four or more rows of endless circulation passages are formed, and when the electric actuator is viewed as elevational section in a direction perpendicular to the axial direction of the screw shaft, an area surrounded by connecting adjacent center points of the loaded rolling passages has a regular polygonal shape, and straight lines are formed so as to connect center points of the loaded rolling passages and non-loaded rolling passages forming a same endless circulation passages for every endless circulation passages formed in four or more rows so that the screw shaft is positioned on an intersecting point at which extending lines of the respective straight lines cross.

It may be further desired that in the electric actuators of the characters mentioned above, the output shaft of the electric motor and the screw shaft are operatively connected through the connection shaft, the connection shaft is supported to be rotatable by a plurality of roller bearings, and the plural roller bearings are constructed such that a load received at a time when the cylinder rod is pushed out is more than a load received at a time when the cylinder rod is pulled back.

Further, it is to be noted that the above embodiments and preferred examples thereof do not include all the necessary characteristics, and sub-combinations thereof are also included in the present invention.

### EFFECTS OF THE INVENTION

According to the present invention, it becomes possible to realize high output and high controllability as well as realizing of an electric actuator having a compact size like a conventional hydraulic cylinder body. That is, the electric actuator according to the present invention solves a problem in cost, controlling, and environment encountered in a conventional hydraulic cylinder, and in addition, is provided with an output performance substantially identical to that of the hydraulic cylinder, so that it is possible to preferably use the actuator which is replaceable for the conventional hydraulic cylinder.

### BRIEF DESRIPTION OF THE DRAWINGS

Fig. 1 is a perspective view showing an outer appearance of an entire structure of an electric actuator according to a first embodiment of the present invention.
Fig. 2 is a sectional side view in a longitudinal direction of the electric actuator according to the first embodiment.
Fig. 3 is a developed perspective view explaining positional relationship between a nut member, a cylindrical member and a cylinder rod.
Fig. 4 is a perspective view showing an outer appearance of the nut member for explaining a specific structure thereof.
Fig. 5 is a view showing an endless circulation passage composed of the nut member and the cylindrical member.
Fig. 6 is a perspective view showing an outer appearance of a modified example of the cylindrical member.
Fig. 7 is a view for explaining setting condition of the endless circulation passage.
Fig. 8 is a view showing an example of the electric actuator according to the first embodiment, in which a connection shaft is supported by a cross-roller bearing.
Fig. 9 is a perspective view showing an outer appearance of an entire structure of an electric actuator according to a second embodiment of the present invention.
Fig. 10 is a longitudinal section viewed from an upper side of the electric actuator according to the second embodiment.

### EXPLANATION OF REFERENCE NUMERALS

10 --- electric motor, 11 --- speed reduction mechanism, 12 --- coupling, 13 --- connection shaft, 13aroller bearing, 13b --- bearing case, 13d --- roller, 15power transmission mechanism, 20 --- screw shaft, 20ascrew groove, 22 --- nut member, 22a --- nut groove, 22bcirculation mechanism, 23 -- ball, 25 --- cylindrical member, 25a --- body portion, 25b --- lid, 26 --- flange, 27 --- cylinder rod, 27a --- cavity, 27b --- mount shaft, 28 --- slide bearing, 30 --- rolling member rolling groove, 32 --- loaded rolling groove, 34 --- non-loaded rolling passage, 35 --- loaded rolling passage, 36 --- return passage, 38 --- endless circulation passage, 40 --- ball, 50 --- nut member body, 51 --- nut member accessory, 52 --- side lid, 53 --- spacer member, 55 --- rail member, 56 --- cylindrical member body, 61, 62pulley, 63 --- timing belt, P₁, P₂ --- center point, Po --- cross point, L₁ --- line, L₂ --- straight line

### BEST MODE FOR EMBODYING THE INVENTION

Hereunder, preferred embodiments for carrying out the present invention will be described with reference to the accompanying drawings. Further, the following embodiments do not limit the present invention in respective claims, and it is not defined that all the combination of subject features explained in the embodiments is essential for the solving means of the present invention.

### First Embodiment

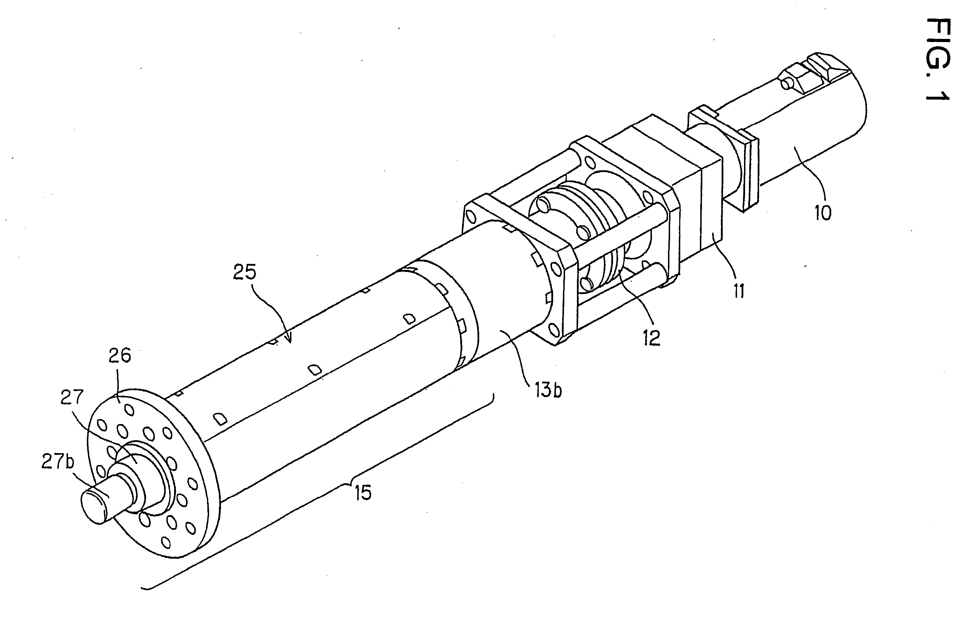

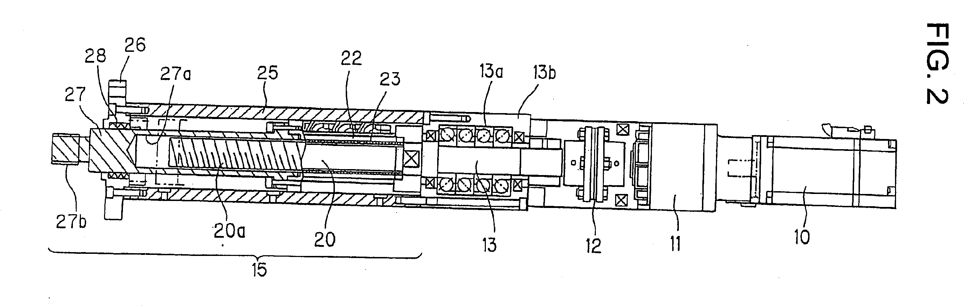

Fig. 1 is a perspective view showing an outer appearance of an entire structure of an electric actuator according to the first embodiment. Fig. 2 is a sectional side view in a longitudinal direction of the electric actuator according to the first embodiment.

The electric actuator of the first embodiment has an electric motor 10 as a driving source. The electric motor 10 is disposed on an end portion opposing to the location of a cylinder rod 27 serving as acting portion, which is driven by the electric motor 10 through an output shaft thereof.

The output shaft of the electric motor 10 is connected to a speed reduction mechanism 11 for amplifying torque, improving inertia reduction and achieving low vibration. In front of the speed reduction mechanism 11, a connection shaft 13 supported by a coupling 12 and a roller bearing 13a is disposed, and further in front of this connection shaft 13, a power transmission mechanism 15 is disposed. The roller bearing 13a supporting the connection shaft 13 has a structure such that a load received at the time when the cylinder rod 27 is pushed out is more than a load received at the time when the cylinder rod 27 is pulled back. According to such structure, the cylinder rod 27 can be effectively moved.

On the other hand, the power transmission mechanism 15 is a mechanism for converting a rotating motion given by the electric motor to a reciprocating motion of a shaft, and is mainly provided with a screw shaft 20, a nut member 22, a cylindrical member 25 and the cylinder rod 27.

The screw shaft 20 is a member operatively connected to the output shaft of the electric motor 10 to be rotatable by the rotating motion transmitted through the output shaft. The screw shaft 20 is formed, on its outer peripheral surface, with a spiral screw groove 20a, which is screw-engaged with a nut groove 22a formed in an inner peripheral surface of the nut member 22 corresponding to the screw groove 20a of the screw shaft 20, whereby when the screw shaft is rotated, the nut member 22 carries out the reciprocating motion in its axial direction.

Further, in the electric actuator of the first embodiment, the screw groove 20a formed to the screw shaft 20 and the nut groove 22a formed to the nut member 22 are screw-engaged with a plurality of balls 23, which are interposed therebetween. The balls 23 can endlessly circulate between the screw groove 20a and the nut groove 22a by a circulation mechanism 22b of the nut member 22, thus realizing the smooth reciprocating motion of the nut member 22 with respect to the screw shaft 20. As the circulation mechanism 22b represented by the first embodiment, a return pipe or a deflector used in an existing rolling member screw device may be adopted.

In the present invention, however, a plurality of rolling members such as balls 23 disposed between the screw groove 20a and the nut groove 22a are not essential for the present invention, and the screw shaft 20 and the nut member 22 may be directly screw-engaged with each other without interposing the balls 23. Further, other rolling members such as rollers may be substituted for the balls 23.

The cylindrical member 25 is a member disposed so as to surround the screw shaft 20 and the nut member 22 and has a structure for guiding the reciprocating motion of the nut member, and constitutes an outer configuration of the power transmission mechanism 15. The cylindrical member 25 of this first embodiment has substantially a circular cylindrical outer appearance. This is made in consideration of a conventional hydraulic cylinder which has substantially a cylindrical outer appearance so that the electric cylinder according to the first embodiment of the present invention can be utilized without making any change to the existing structure to which the hydraulic cylinder is mounted.

Furthermore, since it is necessary for the cylindrical member 25 to guide the reciprocating motion of the nut member 22 and constitute the outer configuration of the electric actuator, it is necessary to receive an outer force by some extent. Then, the circular cylindrical structure capable of most evenly receiving a force is adopted. The cylindrical member 25 is fastened, at its one end by bolts, to a bearing case 13b accommodating the connection shaft 13 and the roller bearing 13a, and a flange 26 for mounting the electric actuator according to the first embodiment is fixedly fastened by bolts at another end thereof. However, this fastening member is not limited to the bolt and various kinds of other fastening members may be utilized.

The cylinder rod 27 is a member operatively connected to one end of the nut member 22 opposing to the electric motor side end thereof and is provided with a cavity 27a in which the screw shaft 20 is accommodated. According to such structure, the cylinder rod 27 can reciprocate in association with the motion of the nut member 22, and according to this reciprocating motion of the nut member, the nut member 22 is moved forward or rearward with respect to the cylindrical member 25.

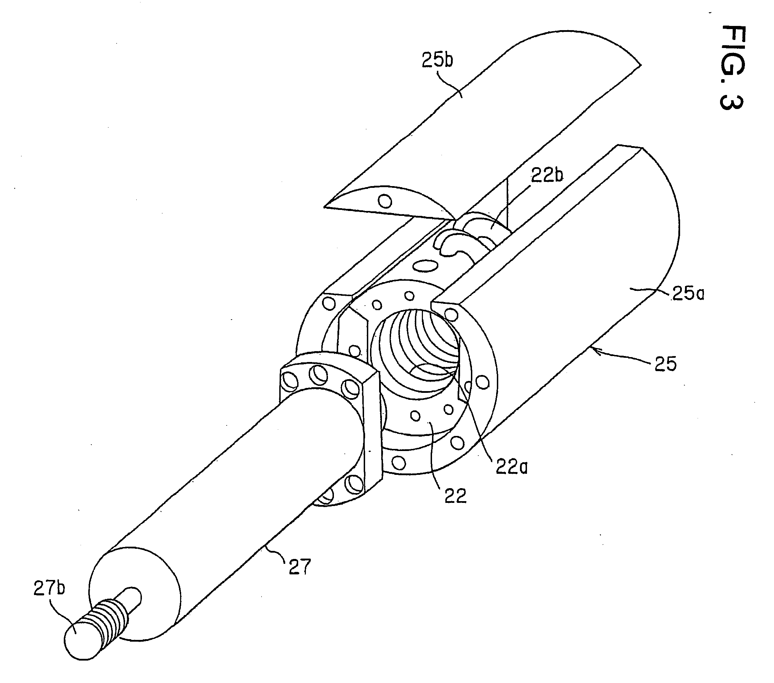

In order to realize the smooth reciprocating motion of the cylinder rod 27 and the receive a load in a direction other than the axial direction, a slide bearing 28 made of metal is disposed on an inner periphery of the flange 26 which comes into slide contact to the cylinder rod 27. That is, the cylinder rod 27 may be smoothly moved forward or backward by being supported by the slide bearing 28. Furthermore, a mount shaft 27b formed with a cut screw groove as connection means for an object is provided to the front end of the cylinder rod 27 so as to enhance a function as an operating member. Further, as shown in Fig. 3, the cylinder rod 27 may be formed as an independent member separated from the nut member 22, but the nut member 22 and the cylinder rod 27 may be integrally formed as one member. By forming them as one member, the number of members can be eliminated and material cost reduction can be achieved. The improved rigidity makes it possible to receive higher load.

In the electric actuator of the first embodiment, as to dimensions, size or shapes of the screw shaft 20, the nut member 22, the cylindrical member 25 and the cylinder rod 27 constituting the power transmission mechanism 15, the design thereof is made such that the size or dimension of the screw shaft 20 constituted as cantilever shaft is made as possible as large and that the size or dimension in the diameter direction of the cylindrical member 25 constituting outer configuration of the electric actuator is made as possible as small. This is made for satisfying requirements of maintaining a compact shape capable of being substituted for a conventional hydraulic cylinder and withstanding a load added by a high output. Accordingly, as to the sizes or dimensions of the nut member 22 and the cylinder rod 27, it may be designed so as to make a most suitable shape selected by the screw shaft 20 and the cylindrical member 25, and in addition, to give a sufficient function to an object.

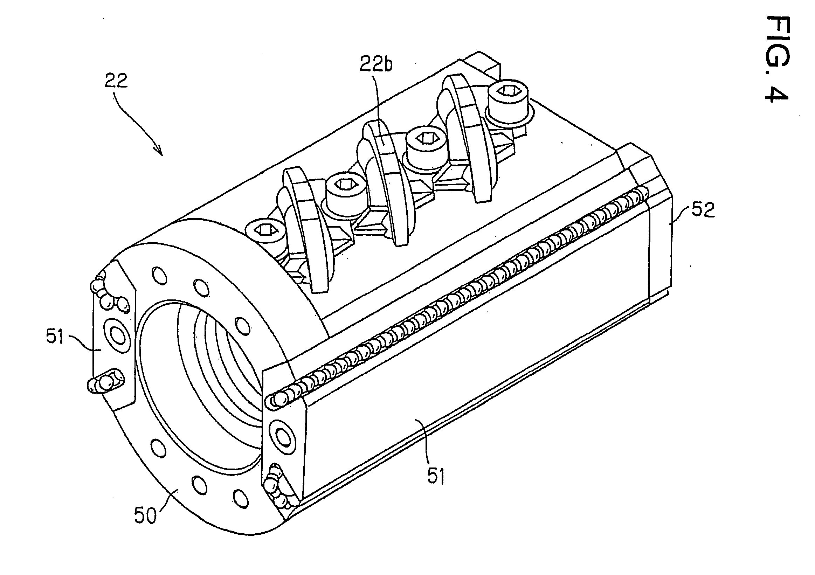

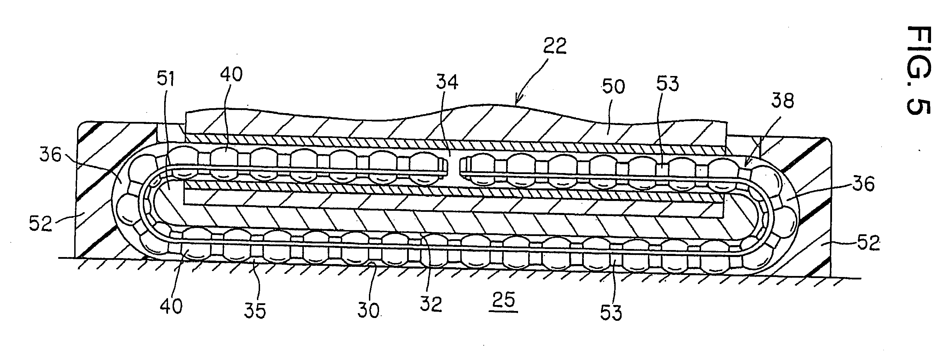

Next, the structure of the power transmission mechanism 15 specific to the electric actuator of the first embodiment will be described hereunder. Fig. 3 is a developed perspective view explaining positional relationship between the nut member, the cylindrical member and the cylinder rod, Fig. 4 is a perspective view showing an outer appearance of the nut member for explaining a specific structure thereof, and Fig. 5 is a view showing an endless circulation passage composed of the nut member and the cylindrical member.

First, with the cylindrical member 25 according to the first embodiment, there is adopted a structure in which substantially the cylindrical member 25 is vertically split into two parts. Such structure is made in consideration of the fact that at least one row (four rows in the first embodiment) of the rolling member rolling groove is formed to the inner periphery of the cylindrical member 25 and the consideration of machining working of this rolling member rolling groove 30. That is, the cylindrical member 25 is vertically split into a body portion 25a having substantially C-shaped section and a lid portion 25b for closing the C-shaped opening of the body portion 25, so that the rolling member rolling groove formed to the inner peripheral surface of the cylindrical member 25 is easily worked. In addition, the body portion 25a and the lid portion 25b may be fixed by means of bolt fastening to thereby form the cylindrical member 25. However, the present invention is not limited to such embodiment and the cylindrical member 25 may be formed from a seamless cylindrical tube to be capable of receiving higher load.

On the other hand, the nut member 22 is reciprocally moved inside the cylindrical member with a state that the cylinder rod 27 is connected to one end thereof, and in the electric actuator of the first embodiment of the present invention, in order to realize the smooth reciprocating motion, the nut member 22 and the cylindrical member 25 are arranged with the endlessly circulated balls being interposed therebetween.

With reference to Figs. 4 and 5, the nut member 22 is provided with: loaded rolling grooves 32 formed in the outer peripheral surface of the nut member so as to correspond to the four rolling member rolling grooves 30; a non-loaded rolling passage 34 formed in parallel with the loaded rolling grooves 32; a pair of return passages 36 connecting both end portions of the loaded rolling passage 35 formed by the rolling member rolling groove 30 and both end portions of the non-loaded rolling passage 34, respectively; and a plurality of balls 40 disposed in an endless circulation passage 38 formed by the loaded rolling passage 35, the non-loaded rolling passage 34 and the paired return passages 36 so as to freely roll therein.

That is, the nut member 22 shown in Figs. 4 and 5 is composed of a nut member body 50 made of steel, a pair of nut member accessories 51 disposed outside the nut member body 50 and formed, in its outer periphery, with the loaded rolling grooves 32, and a pair of side lids 52 connected to the nut member body 50 and both the ends of the nut member accessories 51 to thereby form the paired return passages 36. Further, in the illustrated state of Fig. 4, one side lid 52 is removed.

According to the structure of the nut member 22 and the cylindrical member 25 mentioned above, the electric actuator of the first embodiment is allowed to receive a large capacity of load substantially identical to the case of the hydraulic cylinder. Further, in the illustrated example in Figs. 4 and 5, the plural balls 40 disposed to the nut member 22 are made of resin, and the spacer member 53 is composed of a plurality of spacers and belt members connecting these spacers. However, this spacer member 53 may be substituted with every kind of examples such as spacer ball, or may be eliminated in location.

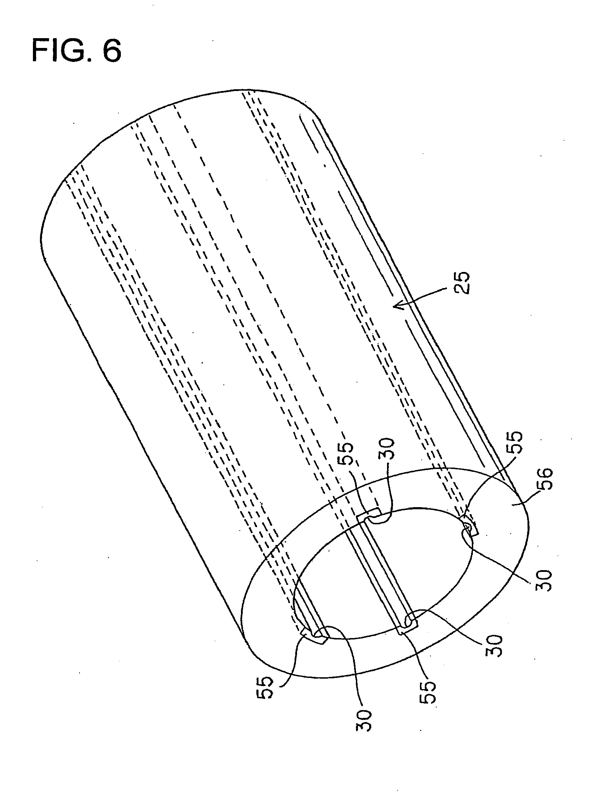

Furthermore, with the cylindrical member 25, the example formed of steel material was explained. For example, as shown in Fig. 6, it may be possible to form only the portion near the four rows of rolling member rolling grooves 30 as a rail member 55 formed of the steel material and to form the other portion as the cylindrical member body 56 formed of aluminium alloy or resin material. According to such structure, the strength of the cylindrical member 25 can be maintained as well as lightening the same.

Further, the locating range of the rail member 55 may be set on the basis of the depth of the maximum shearing stress obtainable by the Hertz's theory. Further, the joining between the rail member 55 and the cylindrical member body 56 may be performed by every kind of joining methods such as weld joining method, soldering method, shrinkage fitting method, press fitting method or the like.

Furthermore, as the aluminium alloy constituting the cylindrical member body 56, there may be utilized one added with various alloy elements such as Al-Co type alloy (2000 series), Al-Mn type alloy (3000 series), Al-Si type alloy (4000 series), Al-Mg type alloy (5000 series), Al-Mg-Si type alloy (6000 series) and Al-Zn-Mg type alloy (7000 series).

Further, the cylindrical member body 56 is formed of a resin material including FRP resin such as CFRP (carbon fiber reinforced plastics), GFRP (glass fiber reinforced plastics), and KFRP (Kevlar fiber reinforced plastics), and a resin material such as RTFE, polyimide (PI), polyamide (PA), polyoxymethylene (POM), polyester, phenol resin, epoxy resin, polyetheretherketones (PEEK) and polyethersulfone (PES).

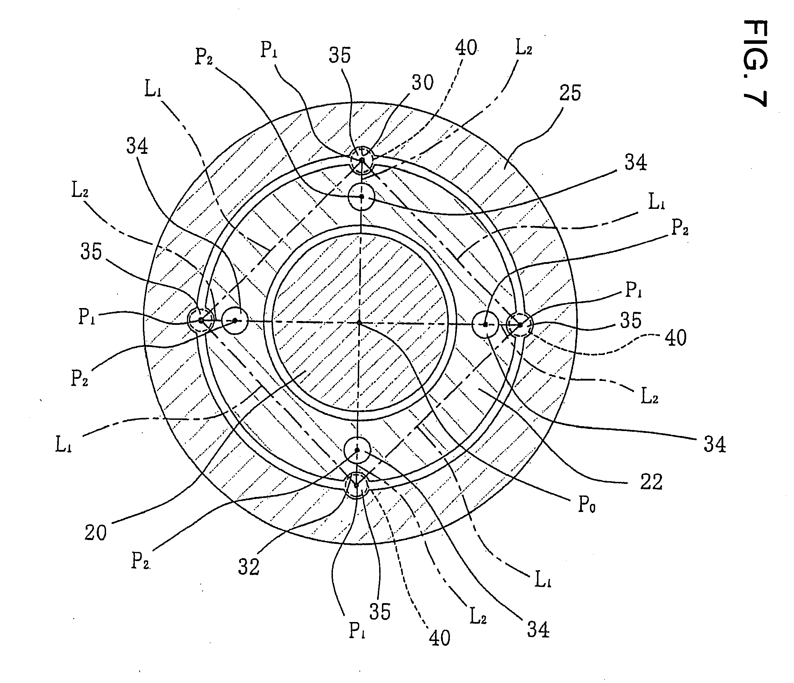

Furthermore, it is desirable that the endless circulation passage 38 formed by the nut member 22 and the cylindrical member 25 are arranged in consideration of the following conditions. That is, it is preferred that the endless circulation passage 38 includes the four or more rows of passages, and in the explanation of the example of the four rows shown in Fig. 7, it is preferred that, when the electric actuator is viewed as elevational section in a direction perpendicular to the axial direction of the screw shaft 20, center points Pi of the loaded rolling passages 35 are determined, an area surrounded by lines L₁ connecting adjacent center points Pi has a regular polygonal shape (square shape in Fig. 7), straight lines L₂ are formed so as to connect center points P₁ and P₂ of the loaded rolling passages 35 and non-loaded rolling passages 34 forming the same endless circulation passages 38 is formed, and the screw shaft 20 is positioned on an intersecting point Po at which extending lines of the respective straight lines cross. By arranging the endless circulation passages 38 by satisfying such locating conditions, every directional load (radial direction, anti-radial direction, lateral direction and so on) can be evenly received, so that it is possible to realize an electric actuator capable of receiving more high load.

Incidentally, it is desirable to locate more than four rows of endless circulation passages 38, and for example, when six rows of endless circulation passages 38 are disposed, the area surrounded by the lines L₁ constitutes a regular hexagonal shape, and the screw shaft 20 may be disposed to the position of the cross point Po at which the extending lines of the straight lines L₂ cross. However, the present invention is not limited to such example, and the number of rows of the endless circulation passages 38 may be one in consideration of baffling of the nut member 22, or in accordance with the using environment or using frequency, two or three rows thereof may be disposed. That is, it is preferred to dispose more than one row of endless circulation passages 38.

Now, again with reference to Figs. 1 and 2, the operation or function of the electric actuator of the first embodiment is described. When power is supplied to the electric motor 10 from a power source, not shown, the electric motor 10 drives the output shaft to rotate the same, and the rotation of the output shaft is transmitted to the screw shaft 20 as rotating driving force. For example, since the screw groove 20a of a general screw shaft 20 is rightward treaded, the screw shaft 20 is rotated leftward, the nut member 20 is moved toward the front end side of the screw shaft 20. According to the movement of the nut member 22, the cylinder rod 27 is moved forward, and hence, the cylinder rod 27 gives a pushing force against an object to be worked.

On the other hand, when the screw shaft is rotated rightward, the nut member 22 moves toward the root portion of the screw shaft 20, so that the cylinder rod 27 is pulled back and pulling force is applied to the object to be worked.

Further, the rotating motion of the screw shaft 20 will be switched in the lateral direction by adopting a reversely rotatable electric motor 10 or a combined structure of unidirectionally rotatable electric motor and a rotating direction switching device.

In the above, although the first preferred embodiment of the present invention was described, the technical scope of the present invention is not limited to the disclosure of this first embodiment, and many other changes and modifications may be made to the above first embodiment.

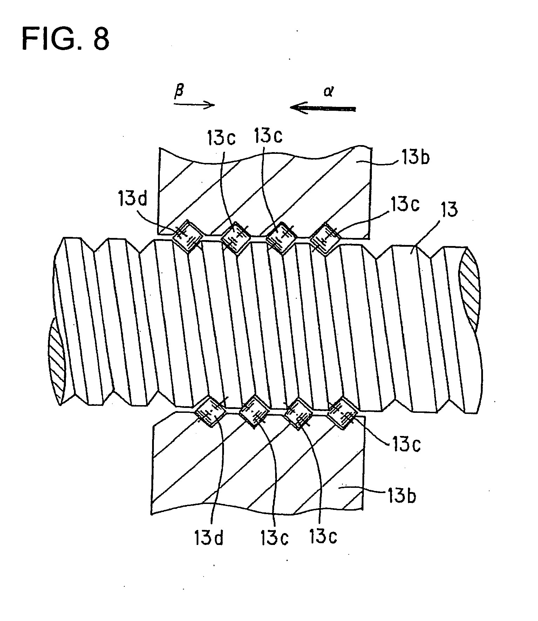

For example, as shown in Fig. 8 showing a roller bearing 13a supporting a connection shaft 13, the roller bearing 13a may be formed as cross roller. That is, the connection shaft is constituted as screw shaft, and rollers 13c and 13d are disposed in crossing form between the opposing bearing case 13b and the connection shaft 13. According to such structure, when a force is received in a direction of arrow α, i.e., the direction in which the cylinder rod 27 is pushed out, three rollers 13C are received with load, and when a force is received in a direction of arrow β, i.e., the direction in which the cylinder rod 27 is pulled back, only one roller 13d is received with the load, thus realizing an effective movement of the cylinder rod.

Furthermore, the plural balls 23 disposed so as to be endlessly circulated between the screw shaft 20 and the nut member 22 may be constructed to limitedly circulate in consideration of the movable amount of the nut member 22. In addition, the shape of the cylindrical member 25 is not circular shape, and a cylindrical member having a square cross section, elliptical section or slot-shaped section, or a section having combined shape thereof may be adopted. Furthermore, every kind of motors such as servo-motor, step motor, AC motor or like may be utilized as the electric motor 10 of the present invention, and in addition, radial type, axial type or like type motor may be also utilized.

Furthermore, as to the electric motor according to the first embodiment, it was explained that it is desirable to form more than one, preferably, four, rows of the endless circulation passages 38 formed from the nut member 22 and the cylinder member 25. However, the present invention is not limited to such examples. That is, in the case where the electric actuator according to the present invention is utilized in an environment in which there is no fear of applying a load with respect to the power transmission mechanism 15 in a radial direction, an anti-radial direction, or a lateral direction, the endless circulation passage 38 and the balls 40 between the nut member 22 and the cylindrical member 25 may be eliminated so that the nut member and the cylindrical member 25 provide a relatively slidable structure.

More specifically, the cylindrical member 25 may be formed so as to be provided with at least one row of guide portion on the inner peripheral surface thereof, and on the other hand, the nut member 22 may be formed so as to be provided with a load guide portion on the outer peripheral surface thereof so as to correspond to the guide portion. That is, the guide portion formed to the cylindrical member 25 may be the inner peripheral surface itself or may be formed as a rail member 55 extending in the axial direction. In such case, however, the rail member may be provided with or not provided with the rolling member rolling groove 30.

On the other hand, the load guide portion formed to the nut member 22 may be the outer peripheral surface itself or may be a rail member disposed so as to correspond to the rail member 55 formed to the inner peripheral surface of the cylindrical member 25. According to this structure of the cylindrical member 25 and the nut member 22, the cylindrical member 25 and the nut member 22 can be relatively slid, and therefore, the cylindrical member 25 can suitably guide the reciprocating motion of the nut member 22 in the axial direction.

It is apparent from the scope of the appended claims that the above-mentioned change or modification may be within the technical scope of the present invention.

### Second Embodiment

In the above mentioned first embodiment, there was described the series connection of the structure of the electric actuator including the electric motor 10, the speed reduction mechanism 11, the coupling 12, the connection shaft 13 and the power transmission mechanism 15. In the second embodiment, however, there will be described a structure of the electric actuator in a case of a limited location space in an axial direction. Further, like reference numerals are added to portions or members corresponding to those of the first embodiment and the description thereof is omitted herein.

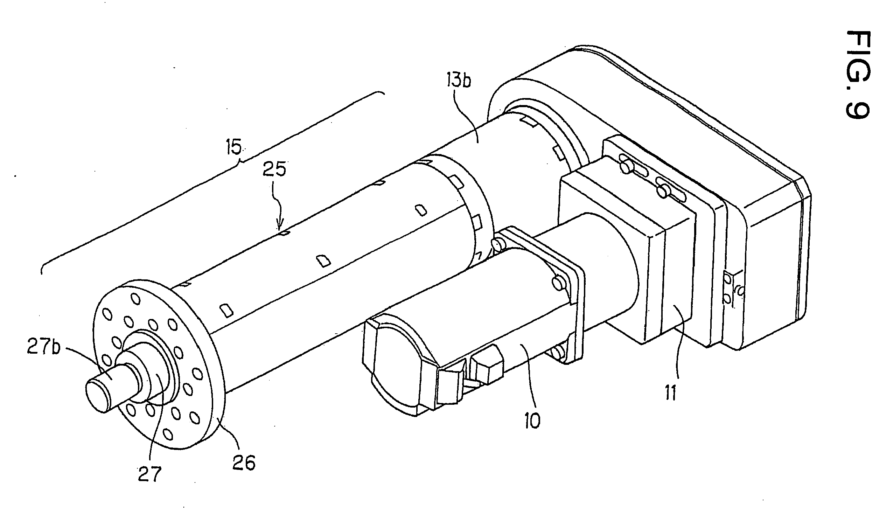

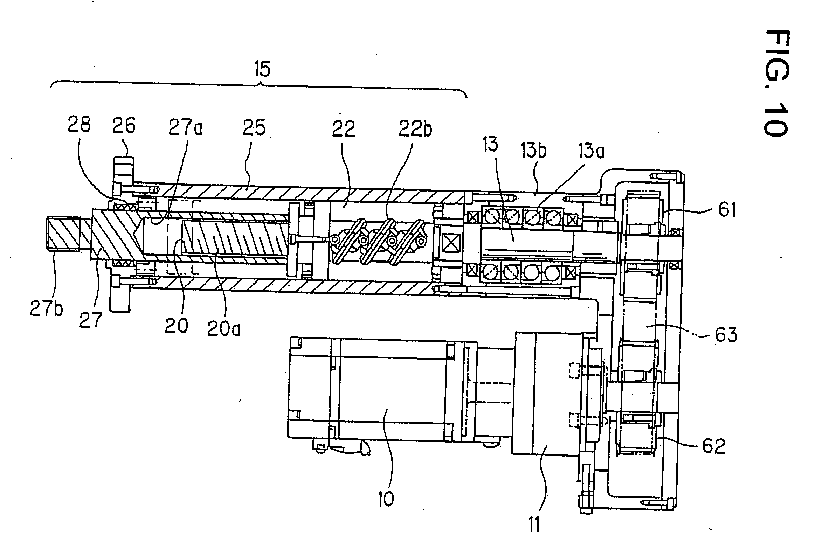

Fig. 9 is a perspective view showing the outer configuration of the electric actuator according to the second embodiment. Fig. 10 is an upper surface view in the longitudinal section of the electric actuator of the second embodiment.

In the electric actuator of the second embodiment, the coupling 12 disposed in the first embodiment is eliminated, and a portion including the electric motor 10 and the speed reduction mechanism 11 are turned so as to provide a structure in parallel with the other portion, and the speed reduction mechanism 11 and the connection shaft 13 are operatively connected through a timing belt stretched around pulleys 61 and 62 disposed to axial end portions thereof, through which the rotation of the electric motor 10 is transmitted to the screw shaft 20.

In the electric actuator of the second embodiment, since the turned structure shown in Figs. 9 and 10 are adopted, the axial length of the electric actuator can be reduced, and in a case of the limited location space in the longitudinal direction, the electric actuator of the present invention may be preferably utilized.

## Claims

1. An electric actuator comprising:
an electric motor provided with an output shaft;
a screw shaft connected to the output shaft to be rotatable and formed, in an outer peripheral surface thereof, with a spiral screw groove;
a nut member formed, in an inner peripheral surface thereof, with a nut groove corresponding to the screw groove, and performing a reciprocating motion in an axial direction in an screw engagement with the screw shaft in accordance with the rotating motion of the screw shaft;
a cylindrical member disposed so as to surround the screw shaft and the nut member; and
a cylinder rod operatively connected to one end of the nut member opposing to an electric motor side end thereof, having a cavity in which the screw shaft is disposed, and being movable in an anteroposterior direction with respect to the cylindrical member in accordance with the reciprocating motion of the nut member,
wherein the cylindrical member is provided, at an inner peripheral surface thereof, with at least one row of guide portion, and the nut member is provided, in an outer peripheral surface thereof, with a load guide portion corresponding to the guide portion so that the cylindrical member guides the reciprocating motion of the nut member in the axial direction thereof.

2. An electric actuator comprising:
an electric motor provided with an output shaft;
a screw shaft connected to the output shaft to be rotatable and formed, in an outer peripheral surface thereof, with a spiral screw groove;
a nut member formed, in an inner peripheral surface thereof, with a nut groove corresponding to the screw groove, and performing a reciprocating motion in an axial direction in an axial direction in an screw engagement with the screw shaft in accordance with the rotating motion of the screw shaft;
a cylindrical member disposed so as to surround the screw shaft and the nut member; and
a cylinder rod operatively connected to one end of the nut member opposing to an electric motor side end thereof, having a cavity in which the screw shaft is disposed, and being movable in an anteroposterior direction with respect to the cylindrical member in accordance with the reciprocating motion of the nut member,
wherein the cylindrical member is provided, at an inner peripheral surface thereof, with at least one row of rolling member rolling groove, and the nut member is provided, in an outer peripheral surface thereof, with a load rolling groove corresponding to the rolling member rolling groove, a non-load rolling passage formed in parallel with the load rolling groove, a pair of return passages connecting two ends formed by the rolling member rolling groove and the loaded rolling groove and two ends formed by the non-loaded rolling passage, respectively, a plurality of rolling members disposed to be rolled in an endless circulation passage composed of the loaded rolling passage, the non-loaded rolling passage and the paired return passages, so that the cylindrical member guides the reciprocating motion of the nut member in the axial direction thereof.

3. The electric actuator according to claim 1 or 2, wherein the screw groove provided for the screw shaft and the nut groove provided for the nut member are screw-engaged with each other through a plurality of rolling members.

4. The electric actuator according to claim 3, wherein the nut member is provided with a circulation mechanism for endlessly circulating the plural rolling members disposed between the screw groove and the nut groove.

5. The electric actuator according to claim 1 or 2, wherein the nut member and the cylinder rod are integrally formed.

6. The electric actuator according to claim 1 or 2, wherein the cylindrical member is formed in substantially a circular cylindrical shape.

7. The electric actuator according to claim 6, wherein the cylindrical member is composed of a seamless cylinder.

8. The electric actuator according to claim 2, wherein the cylindrical member has a portion near the rolling member rolling groove, the portion being formed of a steel material, and another portion thereof is formed of aluminium alloy or resin.

9. The electric actuator according to claim 1 or 2, wherein the cylinder rod is supported to be movable in an axial direction through a slide bearing provided for the cylindrical member.

10. The electric actuator according to claim 2, wherein four or more rows of endless circulation passages are formed, and when the electric actuator is viewed as elevational section in a direction perpendicular to the axial direction of the screw shaft, an area surrounded by connecting adjacent center points of the loaded rolling passages has a regular polygonal shape, and straight lines are formed so as to connect center points of the loaded rolling passages and non-loaded rolling passages forming a same endless circulation passages for every endless circulation passages formed in four or more rows so that the screw shaft is positioned on an intersecting point at which extending lines of the respective straight lines cross.

11. The electric actuator according to claim 1 or 2, wherein the output shaft of the electric motor and the screw shaft are operatively connected through the connection shaft, the connection shaft is supported to be rotatable by a plurality of roller bearings, and the plural roller bearings is constructed such that a load received at a time when the cylinder rod is pushed out is more than a load received at a time when the cylinder rod is pulled back.
